# FASCICULE DE BREVET EUROPEEN

(11) **EP 1 438 804 B1**
(45) Date de publication et mention de la délivrance du brevet: **29.03.2006**
(21) Numéro de dépôt: 02791896.0
(22) Date de dépôt: 24.10.2002
(51) Int. Cl.: H04L 9/30

(54) **PROCEDE CRYPTOGRAPHIQUE A CLE PUBLIQUE BASE SUR LES GROUPES DE TRESSES**
KRYPTOGRAPHISCHES VERFAHREN UNTER DER BENUTZUNG ÖFFENTLICHER SCHLÜSSEL BASIEREND AUF DEN GRUPPEN DER ZÖPFE
PUBLIC KEY CRYPTOGRAPHIC METHOD BASED ON BRAID GROUPS

(30) Priorité: 25.10.2001 FR 0113787
(43) Date de publication de la demande: 21.07.2004
(73) Titulaire: FRANCE TELECOM, 75015 Paris (FR); CENTRE NATIONAL DE LA RECHERCHE SCIENTIFIQUE (CNRS), 75794 Paris Cedex 16 (FR)
(72) Inventeur: GIRAULT, Marc, F-14000 Caen (FR); MISARSKY, Jean-François, F-14000 Caen (FR); DEHORNOY, Patrick, F-27180 Arnières Sur Iton (FR); SIBERT, Hervé, 14000 Caen (FR)
(86) Numéro de dépôt international: PCT/FR2002/003665
(87) Numéro de publication internationale: WO 2003/036863

(56) Documents cités:
- ANSHEL I ET AL: "AN ALGEBRAIC METHOD FOR PUBLIC KEY CRYPTOGRAPHY" MATHEMATICAL RESEARCH LETTERS, [en ligne] vol. 6, 1999, pages 1-5, XP002208338 Extrait de l'Internet: <URL:http://www-cs.engr.ccny.cuny.edu/~csm ma/MRLpap.pdf> [extrait le 2002-08-01]
- ANSHEL I ET AL: "New key agreement protocols in braid group cryptography" , TOPICS IN CRYPTOLOGY - CT-RSA 2001. THE CRYPTOGRAPHERS' TRACK AT RSA CONFERENCE 2001. PROCEEDINGS (LECTURE NOTES IN COMPUTER SCIENCE VOL.2020), TOPICS IN CRYPTOLOGY - CT-RSA 20001, SAN FRANCISCO, CA, USA, 8-12 APRIL 2001 , 2001, BERLIN, GERMANY, SPRINGER-VERLAG, GERMANY, PAGE(S) 13 - 27 XP002208339 ISBN: 3-540-41898-9 page 18, ligne 21 -page 20, ligne 3 page 22, ligne 11 -page 23, ligne 5
- KI HYOUNG KO ET AL: "NEW PUBLIC-KEY CRYPTOSYSTEM USING BRAID GROUPS" , ADVANCES IN CRYPTOLOGY. CRYPTO 2000. 20TH ANNUAL INTERNATIONAL CRYPTOLOGY CONFERENCE, SANTA BARBARA, CA, AUG. 20 - 24, 2000. PROCEEDINGS, LECTURE NOTES IN COMPUTER SCIENCE;VOL. 1880, BERLIN: SPRINGER, DE, PAGE(S) 166-183 XP001003403 ISBN: 3-540-67907-3 cité dans la demande page 170, ligne 13 -page 171, ligne 14 page 173, ligne 14 -page 174, ligne 13 page 174, ligne 33 -page 177, ligne 36

## Description

La présente invention concerne un procédé cryptographique à clé publique basé sur les groupes de tresses.

L'invention trouve une application particulièrement avantageuse dans le domaine des procédés de cryptographie à clé publique d'exécution rapide, notamment dans des environnements peu dotés de ressources, tels que les cartes à microprocesseur standards, avec ou sans contacts.

Dans le domaine de la cryptographie à clé publique, chaque utilisateur détient une paire de clés pour un usage donné, ladite paire étant constituée d'une clé secrète et d'une clé publique associée. Par exemple, s'il s'agit d'une paire de clés dédiée à la confidentialité, alors la clé publique est utilisée pour chiffrer les données, tandis que la clé secrète est utilisée pour les déchiffrer, c'est à dire pour rétablir les données en clair. Par contre, s'il s'agit d'une paire de clés dédiée à l'authentification, alors la clé secrète est utilisée pour calculer des valeurs d'authentification, tandis que la clé publique est utilisée pour vérifier ces valeurs d'authentification. D'autres usages, tels que signatures numériques ou échanges de clés, sont également possibles.

La cryptographie à clé publique est d'une très grande utilité dans la mesure où, contrairement à la cryptographie à clé secrète, elle n'exige pas que les interlocuteurs partagent le même secret pour établir une communication sécurisée. Cependant, cet avantage en terme de sécurité s'accompagne d'un désavantage en terme de performance, car les procédés de cryptographie à clé publique (encore appelés « schémas à clé publique ») sont souvent cent ou mille fois plus lents que les procédés de cryptographie dits à clé secrète (encore appelés « schémas à clé secrète »). C'est donc un défi très important que de trouver des procédés de cryptographie à clé publique d'exécution rapide, de façon à pouvoir les mettre en oeuvre dans les environnements dotés de peu de ressources évoqués plus haut, comme les cartes à microprocesseur.

La plupart des schémas à clé publique existant actuellement reposent sur la difficulté de problèmes mathématiques issus du domaine de l'arithmétique, ou « théorie des nombres ». C'est ainsi que la sécurité du schéma de chiffrement et de signature électronique connu sous le nom de RSA (du nom de ses auteurs : Rivest, Shamir et Adleman) repose sur la difficulté du problème de la factorisation des entiers : étant donné un grand nombre entier (plus de 1 000 bits) égal au produit de deux ou plusieurs facteurs premiers de tailles comparables, il n'existe pas de méthode efficace pour retrouver ces facteurs premiers.

D'autres schémas à clé publique, tels que le schéma de signature électronique décrit dans le brevet français n° 2 716 058, font reposer la sécurité sur la difficulté du problème du logarithme discret. Tous ces schémas ont en commun d'utiliser comme opérations de base des opérations sur des entiers, comme des multiplications modulaires : ab (modulo n), des divisions modulaires : a/b (modulo n), ou encore des exponentiations modulaires : a^{b} (modulo n) où a et b sont des entiers.

Le fait que la plupart des schémas à clé publique existants reposent sur l'arithmétique présente au moins deux inconvénients.

Le premier inconvénient est que l'existence d'algorithmes efficaces pour résoudre le problème de la factorisation et celui du logarithme discret lorsque les entiers considérés ont une longueur de quelques centaines de bits, implique de prendre des longueurs d'entiers (en particulier des longueurs de clés) très élevées, c'est à dire 1 000 bits ou plus à l'heure actuelle. Il s'ensuit des difficultés de stockage et, surtout, des temps de calcul eux-mêmes très élevés. De plus, l'efficacité de ces algorithmes s'accroissant assez rapidement avec le temps, les longueurs de clés doivent être augmentées en conséquence.

Le deuxième inconvénient est qu'il est dangereux de faire reposer la sécurité de la majorité des applications sécurisées sur la difficulté de deux problèmes mathématiques seulement. Ceci est d'autant plus vrai que ces deux problèmes sont voisins l'un de l'autre et il est tout à fait plausible que la découverte d'un algorithme efficace pour l'un s'accompagne d'un algorithme efficace de résolution pour l'autre.

C'est pourquoi, depuis une quinzaine d'années, beaucoup d'efforts ont été faits pour construire des schémas cryptographiques à clé publique qui reposent sur d'autres problèmes que les deux mentionnés ci-dessus et/ou sur d'autres objets mathématiques que des entiers. En particulier, il a été proposé de remplacer les opérations sur des entiers par des opérations sur les points de courbes dites « elliptiques ». La motivation en est que le problème du logarithme discret semble encore plus difficile à résoudre dans les courbes elliptiques, ce qui permet de réduire les longueurs de clés sans compromettre la sécurité des schémas considérés.

Cependant, l'utilisation de courbes elliptiques ne résout que partiellement les deux problèmes soulevés ci-dessus. En effet, même si les courbes elliptiques sont des objets mathématiques différents et plus complexes que les ensembles d'entiers, elles en restent relativement proches en ce sens que la théorie qui les décrit a des relations très étroites avec la théorie des nombres. Un effet tangible de cette proximité est que les calculs à effectuer sur les courbes elliptiques se ramènent à une succession d'opérations sur des entiers semblables à celles définies plus haut, même si les entiers sont de taille inférieure. Une conséquence est que les temps de calcul restent trop élevés.

Il subsiste donc la nécessité d'utiliser à des fins cryptographiques des objets mathématiques très différents de ceux que fournissent la théorie des nombres et celles qui lui sont proches, de manière, d'une part, à disposer de solutions de remplacement en cas de découverte d'algorithmes efficaces pour résoudre les problèmes puisés dans les théories ci-dessus et, d'autre part, à disposer de solutions extrêmement efficaces en terme de performance et, notamment, en terme de temps de calcul.

Des tentatives ont été faites dans ce sens. L'une d'elles (voir K.H.Ko, S.J.Lee, J.H.Cheon, J.W.Han, J.Kang et C.Park, *New Public-Key Cryptosystem Using Braid Groups,* Advances in Cryptology, LNCS 1880, p.166-183, Springer Verlag, août 2000) consiste à utiliser des objets mathématiques appelés « groupes de tresses ».

Une tresse, au sens mathématique du terme, est une conceptualisation et une généralisation de la notion de tresse au sens géométrique et ordinaire du terme. Pour plus de détails sur la théorie des tresses, on se reportera à l'article de P.Dehornoy, *L'art de tresser,* Pour la Science, Dossier hors-série « La science des noeuds », p.68-75, 1997.

L'ensemble des « tresses à n brins » constitue un groupe G, muni d'une loi de composition interne appelée produit qui, à deux tresses X et Y, associe une tresse notée XY, résultat de l'opération consistant à « attacher » la tresse Y sous la tresse X. En général, le produit de tresses n'est pas une opération commutative. De plus, à toute tresse à n brins on peut associer de manière unique une permutation de l'ensemble {1,2,...,n}. Une tresse dont la permutation est la permutation identité (qui envoie tout entier de 1 à n sur lui-même) est dite pure.

Le groupe G de tresses à n brins est doté d'un élément neutre E, représenté par n brins non tressés, tel que, pour toute tresse X, les produits EX et XE sont tous deux égaux à X. De plus, toute tresse X possède un inverse noté X⁻¹ tel que les produits XX⁻¹ et X⁻¹X sont tous deux égaux à E.

Les tresses à n brins du groupe G peuvent être codées de plusieurs manières, appelées représentations. Pour coder une tresse dans une représentation donnée, on lui associe un ou plusieurs « représentants ». Si X est une tresse, on notera x un représentant de X dans la représentation sous-jacente. Dans les représentations usuelles telles que celles utilisées par la présente invention, si une tresse X et une tresse Y ont respectivement comme représentants x et y, alors il existe une opération simple sur x et y dont le résultat, noté xy, est un représentant de la tresse XY, de même qu'il existe une opération simple sur x dont le résultat, noté x⁻¹, est un représentant de la tresse X⁻¹.

La représentation la plus répandue, dite « standard », repose sur le fait que toute tresse peut se décomposer comme un produit de n-1 tresses élémentaires, que l'on note chacune par une lettre d'un alphabet, et de leurs inverses. On notera par des lettres minuscules des représentants de ces tresses élémentaires. Par exemple, dans le cas des tresses à 4 brins, on note les 3 tresses élémentaires A, B, et C, de sorte qu'une tresse quelconque X du groupe peut s'exprimer en fonction des tresses A, B, C, et de leurs inverses A⁻¹, B⁻¹, C⁻¹, et ceci de manière non unique. Par exemple, les tresses ABA et BAB sont égales. On dira que aba et bab sont des représentants de tresse équivalents, c'est-à-dire qu'ils représentent la même tresse. De même, la tresse B est égale à la tresse BBB⁻¹, de sorte que les représentants b et bbb⁻¹ sont équivalents.

D'autres représentations, que l'on dira « alternatives », du groupe G peuvent être employées. Ainsi, une tresse à n brins peut être codée comme un produit de tresses « simples » ou « canoniques », représentées par des permutations de {1,2,...,n}, et de leurs inverses. Mentionnons encore une représentation de G appelée « représentation de Birman-Ko-Lee », où le codage se fait encore à l'aide de permutations, ou à l'aide de certains tableaux de n nombres tous compris entre 1 et n, et une autre, appelée représentation de Dynnikov, où le codage se fait à l'aide d'entiers. Là encore, une tresse peut avoir plusieurs représentants, et des représentants d'une même tresse sont dits équivalents.

Dans la représentation dite « standard », où une tresse est codée par des mots, on introduit la notation « - », signifiant « équivalent à ». On notera « u~v », où u est un représentant de la tresse U, et v un représentant de la tresse V, lorsque les tresses U et V sont égales. Les relations d'équivalence suivantes permettent exactement de déterminer si deux mots représentent la même tresse :
- aa⁻¹~a⁻¹a~e,
- ac~ca si a et c sont des lettres non consécutives,
- aba~bab si a et b sont des lettres consécutives.

Un procédé cryptographique du type précité est également décrit dans le document ANSHEL I. et. al. : « AN ALGEBRAIC METHOD FOR PUBLIC KEY CRYPTOGRAPHY » Mathematical Research Letters, Vol. 6, 1999, pages 1-5. Un tel procédé met en oeuvre une clé secrète et une clé publique, ladite clé secrète étant définie par un représentant d'une tresse donnée dans un groupe de tresses, et ladite clé publique étant définie notamment par un représentant de la tresse, transformée de la tresse par un opérateur.

Les procédés de cryptographie à clé publique utilisant les tresses précédemment cités exclusivement dédiés à la confidentialité des données, qui sont chiffrées avant d'être transmises, puis déchiffrées par le destinataire.

Le problème technique à résoudre par l'objet de la présente invention est de proposer un procédé de cryptographie à clé publique basé sur les groupes de tresses, qui, d'une part, permettrait non seulement d'assurer la confidentialité des données mais aussi l'authentification d'entités et/ou de données et, d'autre part, permettrait d'obtenir, à la fois, un niveau de sécurité élevé et des temps de calcul rapides, compatibles avec une application du procédé à des systèmes à ressources limitées en puissance, comme les cartes à microprocesseurs.

La solution au problème technique posé consiste, selon la présente invention, en ce que ledit procédé comprend au moins les étapes suivantes :
- envoi, par un prouveur, en direction d'un vérificateur, d'au moins un représentant qui est déterminé à partir d'au moins un élément faisant partie de l'ensemble comprenant le représentant définissant la clé secrète du prouveur, le représentant définissant la clé publique du prouveur, des premières valeurs préalablement déterminées par le prouveur et/ou le vérificateur,
- vérification, par le vérificateur, de l'équivalence entre ledit au moins un représentant reçu et un autre représentant qui est déterminé à partir d'au moins un élément faisant partie de l'ensemble comprenant le représentant définissant la clé publique du prouveur, des secondes valeurs préalablement déterminées par le prouveur et/ou le vérificateur,
- authentification du prouveur par le vérificateur si l'équivalence est vérifiée.

Ainsi, on comprend que la sécurité du procédé cryptographique selon l'invention repose sur la difficulté de reconstituer la tresse secrète S à partir du représentant v de T(S) contenu dans la clé publique, cette reconstitution se heurtant cumulativement au problème de l'égalité de tresses, donc de l'équivalence de représentants, et à celui de l'inversion de l'opérateur T. En ce sens, il est proposé deux exemples pour l'opérateur T pouvant convenir à la mise en oeuvre du procédé, objet de l'invention :
- l'opérateur T est défini par T(S)=SWS⁻¹, où W est une tresse d'un groupe **G** dont un représentant w forme, avec un représentant v de V=T(S), ladite clé publique, et S⁻¹ la tresse inverse de S dans le groupe G,
- l'opérateur T est défini par la donnée d'un entier positif p au moins égal à 2, et par T(S)=S^{P}=S...S, produit de S p fois.

Le premier opérateur met en jeu le problème de la conjugaison, considéré comme extrêmement difficile : il s'agit, connaissant un représentant de la tresse SWS⁻¹, de trouver un représentant de la tresse S. En particulier, l'utilisation de formes réduites, qui sont des représentants privilégiés des tresses, rend ce problème particulièrement inextricable. Il en est de même du problème de la racine, mis en oeuvre dans le deuxième opérateur : trouver un représentant de S connaissant un représentant de S^{P} est, en pratique, une opération irréalisable.

Par ailleurs, l'opération de vérification d'équivalence de représentants de tresses est rendue d'autant plus rapide, qu'elle est réalisée au moyen d'une forme réduite des représentants desdites tresses, ou de la forme réduite de représentants de tresses calculées à partir desdites tresses. L'intérêt de ces formes réduites, fonctions qui transforment un représentant d'une tresse en un autre représentant (éventuellement identique) de cette même tresse, est qu'elles fournissent en effet des méthodes efficaces pour résoudre le problème, non trivial a priori, de savoir si deux tresses sont égales, à partir de représentants desdites tresses.

Une forme réduite FR est caractérisée par le fait qu'elle transforme tout représentant de la tresse neutre E en un représentant trivial (c'est-à-dire vide) noté e. Cependant, deux représentants d'une même tresse n'ont pas forcément la même forme réduite. Il en est ainsi de la forme réduite développée par P.Dehornoy, A *Fast Method for Comparing Braids,* Advances in Mathematics, n°125, pp.200-235,1997. Pour savoir si deux représentants u et v de tresses U et V sont équivalents, on calcule la forme réduite de uv⁻¹, qui est un représentant de la tresse UV⁻¹. En effet, il revient au même de dire que u et v sont équivalents, ou que uv⁻¹ représente la tresse triviale E. Ainsi, u et v sont équivalents, si et seulement si FR(uv⁻¹)=e. De façon alternative, on peut utiliser u⁻¹v au lieu de uv⁻¹.

Un cas particulier de formes réduites est constitué par les formes normales. Une forme normale FN est une forme réduite qui, à deux représentants quelconques d'une même tresse, associe le même représentant de cette tresse. En d'autres termes, deux représentants u et v de tresses sont équivalents, si et seulement si ils ont la même forme normale FN(u)=FN(v). Plusieurs façons de définir une telle forme normale FN sont décrites dans l'état de la technique, en particulier dans D. Epstein et al., *Word Processing in Groups,* Jones and Barlett Publishers, Boston, 1988. Certaines formes normales peuvent être calculées de manière efficace, en particulier dans le cas des représentations « alternatives » du groupe de tresses décrites précédemment : les représentants des tresses se prêtent alors particulièrement au calcul de formes normales.

Cependant, dans le cas de la représentation « standard », l'utilisation d'une forme réduite permet d'obtenir des algorithmes plus efficaces, ceci étant dû au fait que les exigences sur une forme réduite sont moins fortes que sur une forme normale, deux représentants équivalents n'ayant pas nécessairement même forme réduite, alors qu'ils ont nécessairement la même forme normale. C'est ainsi que l'algorithme calculant une forme réduite cité ci-dessus, est plus rapide que tout algorithme connu calculant une forme normale dans le cas de la représentation « standard ». On comprend alors que, suivant le choix de la représentation, il y aura avantage à mettre en oeuvre le procédé cryptographique de l'invention tantôt avec une forme réduite non nécessairement normale notée FR (typiquement, en représentation « standard »), tantôt avec une forme réduite normale notée FN (en particulier dans les représentations « alternatives »).

On notera que le fait qu'une forme réduite ne soit éventuellement pas unique pour une tresse donnée ne constitue pas un inconvénient lorsqu'une décision à prendre dépend seulement du fait que deux mots soient équivalents ou non ; par exemple « L'entité avec laquelle on communique est-elle authentique ou non ? ».

Quatre exemples d'application du procédé cryptographique conforme à l'invention vont maintenant être décrits en détail qui, de manière non limitative, sont tous des protocoles d'authentification.

De même, et bien que cela ne soit pas indispensable, comme on l'a vu plus haut, on utilisera systématiquement des formes réduites FR, qui ne sont pas nécessairement des formes normales, sachant qu'elles constituent le mode de réalisation préféré de l'invention.

Le premier protocole d'authentification fait intervenir un groupe G1 de tresses à n=p+q brins et le problème de la conjugaison. Plus précisément, deux tresses d'un type particulier sont impliquées : l'une n'utilise que les p brins de gauche, et peut être codée, dans la représentation « standard », à l'aide des p-1 premières lettres et de leurs inverses dans un alphabet à n=p+q lettres, l'autre n'utilise que les q brins de droite, et par conséquent peut être codée, dans la représentation « standard », à l'aide des q-1 dernières lettres de cet alphabet et de leurs inverses. Deux telles tresses présentent la caractéristique de commuter l'une avec l'autre, contrairement au cas général.

La clé secrète du prouveur A est un représentant s d'une tresse S à p brins de gauche. La clé publique du prouveur A, utilisée par le vérificateur B, est une paire (v,w), constituée par un représentant w d'une tresse W choisie dans le groupe **G1,** et par un représentant v de la tresse V=T(S)=SWS⁻¹.

L'authentification du prouveur A par le vérificateur B se déroule de la manière suivante, en deux échanges :
1. B choisit une tresse Z à q brins de droite, par choix d'un représentant z. B détient alors un représentant, noté zwz⁻¹, de la tresse C=ZWZ⁻¹. B calcule un représentant c=F1 (zwz⁻¹) de C, et envoie c à A.
2. A calcule un représentant y=F2(scs⁻¹) de la tresse SCS⁻¹, et envoie y à B. B vérifie l'équivalence y~zvz⁻¹, par utilisation d'une forme réduite FR (éventuellement normale).

Le fait que y est équivalent à zvz⁻¹ provient de ce que S et Z commutent l'une avec l'autre ; en effet, y représente la tresse SCS⁻¹ c'est-à-dire :
S(ZWZ⁻¹)S⁻¹=(SZ)W(Z⁻¹S⁻¹)=(ZS)W(S⁻¹Z⁻¹)=Z(SWS⁻¹)Z⁻¹=ZVZ⁻¹, qui est aussi représentée par zvz⁻¹.

La vérification de l'équivalence formulée dans l'étape 2 peut se faire, de manière non exclusive, par la vérification de l'égalité FR(yzv⁻¹z⁻¹)=e, ou, si l'on utilise une forme normale, FN(y)=FN(zvz⁻¹).

Les fonctions F1 et F2 sont des fonctions qui, à un représentant d'une tresse, associent un représentant de cette même tresse. Dans le cas de la représentation « standard », F1 et F2 pourront être, mais pas nécessairement, des formes réduites. Elles seront, typiquement, des formes réduites, généralement autres que celle utilisée pour la vérification d'équivalence. Dans le cas de représentations alternatives, on prendra pour F1 et F2 la forme normale FN.

Par ailleurs, on choisira préférentiellement pour W une tresse pure.

Des variantes de ce protocole peuvent être facilement spécifiées. En particulier, on peut choisir pour v un représentant de la tresse T(S)=S⁻¹WS et modifier le reste du protocole en conséquence. Ou encore, on peut choisir pour S une tresse sur les q brins de droite, et pour Z une tresse sur les p brins de gauche.

Le deuxième protocole d'authentification fait intervenir un groupe G2 de tresses à n brins et le problème de la conjugaison. Il consiste à itérer k fois un protocole de base à 3 échanges, ce dernier n'offrant à lui seul qu'une chance sur deux de détecter un éventuel imposteur, à savoir une entité C, ignorant le secret de A, mais essayant de se faire passer pour A. A l'issue des k itérations, un imposteur n'a plus qu'une chance sur 2^{k} de ne pas être détecté. Ce protocole relève de la catégorie des protocoles à connaissance nulle (« zero-knowledge »).

La clé secrète du prouveur A est un représentant s d'une tresse S du groupe G2. La clé publique du prouveur A, utilisée par le vérificateur B, est une paire (v,w), constituée par un représentant w d'une tresse W choisie dans le groupe **G2,** et par un représentant v de la tresse V=T(S)=SWS⁻¹.

L'authentification du prouveur A par le vérificateur B se déroule de la manière suivante, en trois échanges itérés k fois :
1. A choisit une tresse R, par choix d'un représentant r. A détient donc un représentant rwr⁻¹ de la tresse X=RWR⁻¹. A calcule un représentant x=F1 (rwr⁻¹) de X, et envoie x à B,
2. B tire au hasard un bit c et envoie c à A,
3a.Si c=0, A pose y=r et envoie y à B. B vérifie l'équivalence x~ywy⁻¹, par utilisation d'une forme réduite FR (éventuellement normale).
3b.Si c=1, A calcule un représentant y=F2(rs⁻¹) de la tresse RS⁻¹, et envoie y à B. B vérifie alors l'équivalence x~yvy⁻¹, par utilisation d'une forme réduite FR (éventuellement normale).

En effet, lorsque c=1, x et yvy⁻¹ sont équivalents puisque yvy⁻¹ représente la tresse (RS⁻¹)SWS⁻¹(SR⁻¹)=R(S⁻¹S)W(S⁻¹S)R⁻¹=RWR⁻¹, dont x est un représentant.

La vérification de l'équivalence formulée dans l'étape 3a peut se faire, de manière non exclusive, par la vérification de l'égalité FR(xyw⁻¹y⁻¹)=e, ou, si l'on utilise une forme normale, FN(x)=FN(ywy⁻¹).

La vérification de l'équivalence formulée dans l'étape 3b peut se faire, de manière non exclusive, par la vérification de l'égalité FR(xyv⁻¹y⁻¹)=e, ou, si l'on utilise une forme normale, FN(x)=FN(yvy⁻¹).

Les fonctions F1 et F2 sont des fonctions qui, à un représentant d'une tresse, associent un représentant de cette même tresse. Dans le cas de la représentation « standard », F1 et F2 pourront être, mais pas nécessairement, des formes réduites. Elles seront, typiquement, des formes réduites, généralement autres que celle utilisée pour la vérification d'équivalence. Dans le cas de représentations alternatives, on prendra de préférence pour F1 et F2 la forme normale FN.

Des variantes de ce protocole peuvent être facilement spécifiées. En particulier, on peut choisir pour v un représentant de la tresse T'(S)=S⁻¹WS et modifier le reste du protocole en conséquence.

Le troisième protocole d'authentification fait intervenir un groupe G3 de tresses à n brins et le problème de la conjugaison. Comme le précédent, ce protocole relève de la catégorie des protocoles à connaissance nulle, trois échanges étant itérés k fois.

La clé secrète du prouveur A est un représentant s d'une tresse S du groupe G3. La clé publique du prouveur A, utilisée par le vérificateur B, est une paire (v,w), constituée par un représentant w d'une tresse W choisie dans le groupe G3, et par un représentant v de la tresse V=T(S)=SWS⁻¹.

L'authentification du prouveur A par le vérificateur B se déroule de la manière suivante, en trois échanges itérés k fois :
1. A choisit une tresse R, par choix d'un représentant r. A détient donc un représentant rwr⁻¹ de la tresse X=RWR⁻¹, ainsi qu'un représentant rvr⁻¹ de la tresse X'=RVR⁻¹. A calcule un représentant x=F1 (rwr⁻¹) de X, un représentant x'=F'1 (rvr⁻¹) de X', et envoie x et x' à B,
2. B tire au hasard un bit c et envoie c à A,
3a.Si c=0, A pose y=r et envoie y à B. B vérifie les équivalences x~ywy⁻¹ et x'~yvy⁻¹, par utilisation d'une forme réduite FR (éventuellement normale).
3b.Si c=1, A calcule un représentant y=F2(rsr⁻¹) de la tresse RSR⁻¹, et envoie y à B. B vérifie alors l'équivalence x'~yxy⁻¹, par utilisation d'une forme réduite FR (éventuellement normale).

En effet, lorsque c=1, x' et yxy⁻¹ sont équivalents puisque yxy⁻¹ représente la tresse :
(RSR⁻¹)RWR⁻¹(RS⁻¹R⁻¹)=RS(R⁻¹R)W(R⁻¹R)S⁻¹R⁻¹=R(SWS⁻¹)R⁻¹=RVR⁻¹, dont x' est un représentant.

La vérification de l'équivalence formulée dans l'étape 3a peut se faire, de manière non exclusive, par la vérification des égalités FR(xyw⁻¹y⁻¹)=e et FR(x'yv⁻¹y⁻¹)=e, ou, si l'on utilise une forme normale, FN(x)=FN(ywy⁻¹) et FN(x)=FN(yvy⁻¹).

La vérification de l'équivalence formulée dans l'étape 3b peut se faire, de manière non exclusive, par la vérification de l'égalité FR(x'yx⁻¹y⁻¹)=e, ou, si l'on utilise une forme normale, FN(x')=FN(yxy⁻¹).

Les fonctions F1, F'1 et F2 sont des fonctions qui, à un représentant d'une tresse, associent un représentant de cette même tresse. Dans le cas de la représentation « standard », F1, F'1 et F2 pourront être, mais pas nécessairement, des formes réduites. Elles seront, typiquement, des formes réduites, généralement autres que celle utilisée pour la vérification d'équivalence. Dans le cas de représentations alternatives, on prendra de préférence pour F1 et F'1, et F2 la forme normale FN.

On remarquera que la propriété utilisée dans la vérification est le fait que la conjugaison est auto-distributive. On rappelle qu'une opération * est dite auto-distributive si l'on a : u*(v*w)=(u*v)*(u*w). Ainsi, l'opération de conjugaison pourrait-elle être remplacée dans ce protocole par une autre opération auto-distributive.

Le quatrième protocole d'authentification fait intervenir un groupe **G4** de tresses à n brins et, simultanément, le problème de la racine p-ième et le problème de la conjugaison. Ce protocole relève de la catégorie des protocoles à connaissance nulle au sens des deux précédents.

La clé secrète du prouveur A est un représentant s d'une tresse S du groupe G4. La clé publique du prouveur A, utilisée par le vérificateur B, est un représentant v de la tresse V= S^{P} =S...S, produit de S itéré p fois, avec p un petit entier supérieur ou égal à 2.

L'authentification du prouveur A par le vérificateur B se déroule de la manière suivante, en trois échanges itérés k fois :
1. A choisit une tresse R, par choix d'un représentant r. A détient donc un représentant rvr⁻¹ de la tresse X=RVR⁻¹. A calcule un représentant x=F1 (rvr⁻¹) de X, et envoie x à B,
2. B tire au hasard un bit c et envoie c à A,
3a.Si c=0, A pose y=r et envoie y à B. B vérifie l'équivalence x~yvy⁻¹, par utilisation d'une forme réduite FR (éventuellement normale).
3b.Si c=1, A calcule un représentant y=F2(rsr⁻¹) de la tresse RSR⁻¹, et envoie y à B. B vérifie alors l'équivalence x-y^{P}, par utilisation d'une forme réduite FR (éventuellement normale).

En effet, lorsque c=1, x et y^{P} sont équivalents puisque y^{P} représente la tresse (RSR⁻¹)^{P}=RS^{P}R-¹=RVR⁻¹, dont x est un représentant.

La vérification de l'équivalence formulée dans l'étape 3a peut se faire, de manière non exclusive, par la vérification de l'égalité FR(xyv⁻¹y⁻¹)=e, ou, si l'on utilise une forme normale, FN(x)=FN(yvy⁻¹).

La vérification de l'équivalence formulée dans l'étape 3b peut se faire, de manière non exclusive, par la vérification de l'égalité FR(vy⁻¹... Y⁻¹)=e (y⁻¹ étant itéré p fois), ou, si l'on utilise une forme normale, FN(v)=FN(y...y) (y étant itéré p fois).

Les fonctions F1 et F2 sont des fonctions qui, à un représentant d'une tresse, associent un représentant de cette même tresse. Dans le cas de la représentation « standard », F1 et F2 pourront être, mais pas nécessairement, des formes réduites. Elles seront, typiquement, des formes réduites, généralement autres que celles utilisées pour la vérification d'équivalence. Dans le cas de représentations alternatives, on prendra de préférence pour F1 et F2 la forme normale FN.

## Revendications

1. Procédé cryptographique à clé publique basé sur les groupes de tresses, ledit procédé mettant en oeuvre une clé secrète et une clé publique, ladite clé secrète étant définie par un représentant s d'une tresse donnée S dans un groupe de tresses G, et ladite clé publique étant définie notamment par un représentant v de la tresse T(S), transformée de la tresse S par un opérateur T,
ledit procédé étant **caractérisé en ce qu'**il comprend au moins les étapes suivantes :
- envoi, par un prouveur A, en direction d'un vérificateur B, d'au moins un représentant qui est déterminé à partir d'au moins un élément faisant partie de l'ensemble comprenant le représentant s définissant la clé secrète du prouveur A, le représentant v définissant la clé publique du prouveur A, des premières valeurs préalablement déterminées par le prouveur A et/ou le vérificateur B,
- vérification, par le vérificateur B, de l'équivalence entre ledit au moins un représentant reçu et un autre représentant qui est déterminé à partir d'au moins un élément faisant partie de l'ensemble comprenant le représentant v définissant la clé publique du prouveur A, des secondes valeurs préalablement déterminées par le prouveur A et/ou le vérificateur B,
- authentification du prouveur A par le vérificateur B si ladite équivalence est confirmée.

2. Procédé cryptographique selon la revendication 1, **caractérisé en ce que** le représentant v est la forme réduite FR d'un représentant de la tresse T(S).

3. Procédé cryptographique selon l'une des revendications 1 ou 2, **caractérisé en ce que** ladite opération de vérification de l'équivalence de représentants de deux tresses est réalisée au moyen de la forme réduite FR de représentants de ces deux tresses, ou de la forme réduite de représentants de tresses calculées à partir desdites tresses.

4. Procédé cryptographique selon l'une des revendications 2 ou 3, **caractérisé en ce que** ladite forme réduite FR est une forme normale FN.

5. Procédé cryptographique selon l'une des revendications 2 ou 3, **caractérisé en ce que** ladite forme réduite FR est une forme réduite non normale.

6. Procédé cryptographique selon l'une quelconque des revendications 1 à 5, **caractérisé en ce que** l'opérateur T est défini par T(S)=SWS⁻¹, où W est une tresse d'un groupe G, et dont un représentant w forme, avec le représentant v de la tresse V, ladite clé publique, et S⁻¹ la tresse inverse de la tresse S dans le groupe G.

7. Procédé cryptographique selon l'une quelconque des revendications 1 à 5, **caractérisé en ce que** l'opérateur T est défini par la donnée d'un entier positif p au moins égal à 2, et par T(S)=S^{p}=S...S, produit de S p fois.

8. Procédé cryptographique selon la revendication 6, **caractérisé en ce que**, pour effectuer une authentification d'un prouveur A par un vérificateur B :
- on attribue au prouveur A une clé secrète constituée par un représentant s d'une tresse S à p brins de gauche choisie dans un groupe G1 de tresses à n=p+q brins,
- on attribue au prouveur A une clé publique, utilisée par le vérificateur B, constituée d'un représentant w d'une tresse W choisie dans le groupe G1 et d'un représentant v de la tresse V=T(S)=SWS⁻¹,
- le vérificateur B choisit dans le groupe G1 une tresse Z à q brins de droite, par choix d'un représentant z, calcule un représentant c de la tresse C=ZWZ⁻¹, et envoie c au prouveur A,
- le prouveur A calcule un représentant y de la tresse Y=SCS⁻¹ et envoie y au vérificateur B,
- le vérificateur B vérifie l'équivalence des représentants y et zvz⁻¹.

9. Procédé cryptographique selon la revendication 6, **caractérisé en ce que**, pour effectuer une authentification d'un prouveur A par un vérificateur B :
- on attribue au prouveur A une clé secrète constituée par un représentant s d'une tresse S choisie dans un groupe G2 de tresses à n brins,
- on attribue au prouveur A une clé publique, utilisée par le vérificateur B, constituée d'un représentant w d'une tresse W choisie dans le groupe G2 et d'un représentant v de la tresse SWS⁻¹,
- le prouveur A choisit une tresse R dans le groupe G2, par choix d'un représentant r, calcule un représentant x de la tresse X=RWR⁻¹, et envoie x au vérificateur B,
- le vérificateur B choisit un bit c et envoie c au prouveur A,
• si c=0, le prouveur A pose y=r et envoie y au vérificateur B qui vérifie l'équivalence des représentants x et ywy⁻¹,
• si c=1, le prouveur A calcule un représentant y de la tresse RS⁻¹ et envoie y au vérificateur B, qui vérifie l'équivalence des représentants x et yvy⁻¹,
les trois derniers échanges étant itérés k fois.

10. Procédé cryptographique selon la revendication 6, **caractérisé en ce que**, pour effectuer une authentification d'un prouveur A par un vérificateur B :
- on attribue au prouveur A une clé secrète constituée par un représentant s d'une tresse S choisie dans un groupe G3 de tresses à n brins,
- on attribue au prouveur A une clé publique, utilisée par le vérificateur B, constituée d'un représentant w d'une tresse W choisie dans le groupe **G3** et d'un représentant v de la tresse SWS⁻¹,
- le prouveur A choisit une tresse R dans le groupe **G3,** par choix d'un représentant r, calcule un représentant x de la tresse X=RWR⁻¹, un représentant x' de la tresse X'=RVR⁻¹, et envoie x et x' au vérificateur B,
- le vérificateur B choisit un bit c et envoie c au prouveur A,
• si c=0, le prouveur A pose y=r et envoie y au vérificateur B qui vérifie l'équivalence des représentants x et ywy⁻¹ et celle des représentants x' et yvy⁻¹,
• si c=1, le prouveur A calcule un représentant y de la tresse RSR⁻¹ et envoie y au vérificateur **B**, qui vérifie l'équivalence des représentants x' et yxy⁻¹,
les trois derniers échanges étant itérés k fois.

11. Procédé cryptographique selon la revendication 7, **caractérisé en ce que**, pour effectuer une authentification d'un prouveur A par un vérificateur **B :**
- on attribue au prouveur A une clé secrète constituée par un représentant s d'une tresse S choisie dans un groupe **G4** de tresses à n brins,
- on attribue au prouveur A une clé publique, utilisée par le vérificateur B, constituée par un représentant v de la tresse V=S^{P}=S ... S, produit de S p fois, p étant un entier supérieur ou égal à 2,
- le prouveur A choisit une tresse R dans le groupe G4 par choix d'un représentant r, calcule un représentant x de la tresse X=RVR⁻¹, et envoie x au vérificateur B,
- le vérificateur B choisit un bit c et envoie c au prouveur A,
• si c=0, le prouveur A pose y=r et envoie y au vérificateur B qui vérifie l'équivalence des représentants x et yvy⁻¹,
• si c=1, le prouveur A calcule un représentant y de la tresse RSR⁻¹ et envoie y au vérificateur B, qui vérifie l'équivalence des représentants x et y^{p}=y...y, représentant de la tresse Y^{P} obtenu à partir de y,
les trois derniers échanges étant itérés k fois.

12. Procédé cryptographique selon la revendication 6, **caractérisé en ce que** l'opérateur T est remplacé par une opération auto-distributive.

13. Procédé cryptographique selon la revendication 8, **caractérisé en ce que** ladite tresse W est pure.

## Patentansprüche

1. Kryptografisches Verfahren mit öffentlichem Schlüssel basierend auf den Zopfgruppen,
wobei das genannte Verfahren einen geheimen Schlüssel und einen öffentlichem Schlüssel einsetzt, wobei der geheime Schlüssel durch eine Darstellung s eines gegebenen Zopfes S in einer Zopfgruppe G definiert ist, und der genannte öffentliche Schlüssel insbesondere durch eine Darstellung v des Zopfes T(S), transformiert aus dem Zopf S durch einen Operator T, definiert ist, wobei genanntes Verfahren, **dadurch** charakterisiert ist, dass es mindestens folgende Schritte umfasst:
- Versenden durch einen Beweiser A in Richtung eines Verifizierers B von mindestens einer Darstellung, die bestimmt ist von mindestens einem Element, das Teil der Zusammenstellung ist, welche umfasst die Darstellung s, die den geheimen Schlüssel des Beweisers A definiert, die Darstellung v, die den öffentlichen Schlüssel des Beweisers A definiert, und erste Werte, die vorher durch den Beweiser A und/oder den Verifizierer B bestimmt wurden,
- Verifikation durch den Verifizierer B der Äquivalenz zwischen der genannten mindestens einen erhaltenen Darstellung und einer anderen Darstellung, die bestimmt ist von mindestens einem Element, das Teil der Zusammenstellung ist, die die Darstellung v umfasst, die den öffentlichen Schlüssel des Beweisers A definiert, und zweite Werte, die vorher durch den Beweiser A und/oder den Verifizierer B bestimmt wurden,
- Authentifizierung des Beweisers A durch den Verifizierer B, wenn die genannte Äquivalenz bestätigt ist.

2. Kryptografisches Verfahren gemäß Anspruch 1, **dadurch** charakterisiert, dass die Darstellung v die reduzierte Form FR einer Darstellung des Zopfes T(S) ist.

3. Kryptografisches Verfahren gemäß einem der Ansprüche 1 oder 2, **dadurch** charakterisiert, dass die genannte Verifikationsoperation der Äquivalenz von Darstellungen der zwei Zöpfe mittels der reduzierten Form FR von Darstellungen dieser zwei Zöpfe, oder der reduzierten Form von Darstellungen der Zöpfe, die von den genannten Zöpfen berechnet wurden, realisiert wird.

4. Kryptografisches Verfahren gemäß einem der Ansprüche 2 oder 3, **dadurch** charakterisiert, dass die genannte reduzierte Form FR eine Normalform FN ist.

5. Kryptografisches Verfahren gemäß einem der Ansprüche 2 oder 3, **dadurch** charakterisiert, dass die genannte reduzierte Form FR eine reduzierte nicht normale Form ist.

6. Kryptografisches Verfahren gemäß irgend einem der Ansprüche 1 bis 5, **dadurch** charakterisiert, dass der Operator T definiert ist durch T(S)=SWS⁻¹, wo W ein Zopf einer Gruppe G ist, und von der eine Darstellung w, mit der Darstellung v des Zopfes V, den genannten öffentlichen Schlüssel bildet, und wo S⁻¹ der inverse Zopf des Zopfes S in der Gruppe G ist.

7. Kryptografisches Verfahren gemäß irgend einem der Ansprüche 1 bis 5, **dadurch** charakterisiert, dass der Operator T definiert ist durch eine positive ganze Zahl p mindestens gleich 2 und durch T(S)=S^{P}=S.....S, p-faches Produkt von S.

8. Kryptografisches Verfahren gemäß Anspruch 6, **dadurch** charakterisiert, dass, um eine Authentifizierung eines Beweisers A durch einen Verifizierer B durchzuführen:
- man dem Beweiser A einen geheimen Schlüssel zuweist, der gebildet wird von einem Repräsentanten s eines Zopfes S aus p linksorientierten Strängen, der aus einer Gruppe **G1** von Zöpfen aus n=p+q Strängen ausgewählt wird,
- man dem Beweiser A einen öffentlichen Schlüssel zuweist, der vom Verifizierer B benützt wird und gebildet wird von einer Darstellung w eines Zopfes W, ausgewählt aus der Gruppe **G1,** und von einer Darstellung v des Zopfes V=T(S)=SWS⁻¹,
- der Verifizierer B in der Gruppe **G1** einen Zopf Z mit q rechtsorientierten Strängen durch Wahl einer Darstellung z auswählt, eine Darstellung c des Zopfes C=ZWZ⁻¹ berechnet und c an den Beweiser A sendet,
- der Beweiser A eine Darstellung y des Zopfes Y=SCS⁻¹ berechnet und y an den Verifizierer B sendet,
- der Verifizierer B die Äquivalenz der Darstellungen y und zvz⁻¹ verifiziert.

9. Kryptografisches Verfahren gemäß Anspruch 6, **dadurch** charakterisiert, dass, um eine Authentifizierung eines Beweisers A durch einen Verifizierer B durchzuführen:
- man dem Beweiser A einen geheimen Schlüssel zuweist, der gebildet wird von einer Darstellung s eines Zopfes S, der aus einer Gruppe G2 von Zöpfen aus n Strängen ausgewählt wird,
- man dem Beweiser A einen öffentlichen Schlüssel zuweist, der vom Verifizierer B benützt wird und gebildet wird von einer Darstellung w eines Zopfes W, ausgewählt in der Gruppe **G2,** und von einer Darstellung v des Zopfes SWS⁻¹,
- der Beweiser A in der Gruppe G2 einen Zopf R durch Wahl einer Darstellung r auswählt, eine Darstellung x des Zopfes X=RWR⁻¹ berechnet und x an den Verifizierer B sendet,
- der Verifizierer B ein Bit c auswählt und c an den Beweiser A sendet,
- wenn c=0, setzt der Beweiser A y=r und sendet y an den Verifizierer B, der die Äquivalenz der Darstellungen x und ywy⁻¹ verifiziert,
- wenn c=1, berechnet der Beweiser A eine Darstellung y des Zopfes RS⁻¹ und sendet y an den Verifizierer B, der die Äquivalenz der Darstellungen x und yvy⁻¹ verifiziert,
wobei die drei letzten Austausche k-mal iteriert werden.

10. Kryptografisches Verfahren gemäß Anspruch 6, **dadurch** charakterisiert, dass, um eine Authentifizierung eines Beweisers A durch einen Verifizierer B durchzuführen:
- man dem Beweiser A einen geheimen Schlüssel zuweist, der gebildet wird von einer Darstellung s eines Zopfes S, der aus einer Gruppe G3 von Zöpfen aus n Strängen ausgewählt wird,
- man dem Beweiser A einen öffentlichen Schlüssel zuweist, der vom Verifizierer B benützt wird und gebildet wird von einer Darstellung w eines Zopfes W, ausgewählt in der Gruppe **G3,** und von einer Darstellung v des Zopfes SWS⁻¹,
- der Beweiser A in der Gruppe G3 einen Zopf R durch Wahl einer Darstellung r auswählt, eine Darstellung x des Zopfes X=RWR⁻¹ und eine Darstellung x' des Zopfes X'=RVR⁻¹ berechnet, und x und x' an den Verifizierer B sendet,
- der Verifizierer B ein Bit c auswählt und c an den Beweiser A sendet,
- wenn c=0, setzt der Beweiser A y=r und sendet y an den Verifizierer B, der die Äquivalenz der Darstellungen x und ywy⁻¹ und die der Darstellungen x' und ywy⁻¹ verifiziert,
- wenn c=1, berechnet der Beweiser A eine Darstellung y des Zopfes RSR⁻¹ und sendet y an den Verifizierer B, der die Äquivalenz der Darstellungen x' und yvy⁻¹ verifiziert,
wobei die drei letzten Austausche k-mal iteriert werden.

11. Kryptografisches Verfahren gemäß Anspruch 7, **dadurch** charakterisiert, dass, um eine Authentifizierung eines Beweisers A durch einen Verifizierer B durchzuführen:
- man dem Beweiser A einen geheimen Schlüssel zuweist, der gebildet wird von einer Darstellung s eines Zopfes S, der aus einer Gruppe G4 von Zöpfen aus n Strängen ausgewählt wird,
- man dem Beweiser A einen öffentlichen Schlüssel zuweist, der vom Verifizierer B benützt wird und gebildet wird von einer Darstellung v eines Zopfes V=S^{P}=S....S, p-faches Produkt von S, wobei p eine ganze Zahl größer oder gleich 2 ist,
- der Beweiser A in der Gruppe G4 einen Zopf R durch Wahl einer Darstellung r auswählt, eine Darstellung x des Zopfes X=RVR⁻¹ berechnet und x an den Verifizierer B sendet,
- der Verifizierer B ein Bit c auswählt und c an den Beweiser A sendet,
- wenn c=0, setzt der Beweiser A y=r und sendet y an den Verifizierer B, der die Äquivalenz der Darstellungen x und yvy⁻¹ verifiziert,
- wenn c=1, berechnet der Beweiser A eine Darstellung y des Zopfes RSR⁻¹ und sendet y an den Verifizierer B, der die Äquivalenz der Darstellungen x und y^{P}=y... y verifiziert, Darstellung des aus y erhaltenen Zopfes Y^{P},
wobei die drei letzten Austausche k-mal iteriert werden.

12. Kryptografisches Verfahren gemäß Anspruch 6, **dadurch** charakterisiert, dass der Operator T durch eine selbstdistributive Operation ersetzt wird.

13. Kryptografisches Verfahren gemäß Anspruch 8, **dadurch** charakterisiert, dass genannter Zopf W rein ist.

## Claims

1. A public key cryptographic method based on groups of braids, said method employing a secret key and a public key, said secret key being defined by a representative s of a given braid S in a braid group G, and said public key being defined in particular by a representative v of the braid T(S) converted from the braid S by an operator T,
said method being **characterized in that** it comprises at least the following steps:
- a prover A sending to a verifier B, at least one representative that is determined from at least one element forming part of the set comprising the representative s defining the secret key of the prover A, the representative v defining the public key of the prover A, and first values determined beforehand by the prover A and/or the verifier B,
- the verifier B verifying the equivalence between said at least one received representative and another representative that is determined from at least one element forming part of the set comprising the representative v defining the public key of the prover A, and second values determined beforehand by the prover A and/or the verifier B,
- the verifier B authenticating the prover A if said equivalence is confirmed.

2. A cryptographic method according to claim 1, **characterized in that** the representative v is the reduced form FR of a representative of the braid T(S).

3. A cryptographic method according to either claim 1 or claim 2, **characterized in that** said operation of verifying the equivalence of representatives of two braids is carried out using the reduced form FR of representatives of said two braids or the reduced form of representatives of braids calculated from said braids.

4. A cryptographic method according to either claim 2 or claim 3, **characterized in that** said reduced form FR is a normal form FN.

5. A cryptographic method according to either claim 2 or claim 3, **characterized in that** said reduced form FR is a non-normal reduced form.

6. A cryptographic method according to any one of claims 1 to 5, **characterized in that** the operator T is defined by T(S) = SWS⁻¹, where W is a braid of a group G and a representative w of which forms said public key with the representative v of the braid V and S⁻¹ is the inverse braid of the braid S in the group G.

7. A cryptographic method according to any one of claims 1 to 5, **characterized in that** the operator T is defined by a positive integer p not less than 2 and by T(S) = S^{P} = S...S, the product of S multiplied by itself p times.

8. A cryptographic method according to claim 6, **characterized in that**, for authentication of a prover A by a verifier B:
- the prover A is assigned a secret key comprising a representative s of a braid S with p left-hand strands selected from a group G1 of braids with n = p + q strands,
- the prover A is assigned a public key, used by the verifier B, comprising a representative w of a braid W selected from the group G1 and a representative v of the braid V = T(S) = SWS⁻¹,
- the verifier B selects in the group G1 a braid Z with q right-hand strands by selecting a representative z, calculates a representative c of the braid C = ZWZ⁻¹, and sends c to the prover A,
- the prover A calculates a representative y of the braid Y = SCS⁻¹ and sends y to the verifier B, and
- the verifier B verifies the equivalence of the representatives y and zvz⁻¹.

9. A cryptographic method according to claim 6, **characterized in that**, for authentication of a prover A by a verifier B:
- the prover A is assigned a secret key comprising a representative s of a braid S selected from a group G2 of braids with n strands,
- the prover A is assigned a public key, used by the verifier B, comprising a representative w of a braid W selected from the group G2 and a representative v of the braid SWS⁻¹,
- the prover A selects a braid R in the group G2 by selecting a representative r, calculates a representative x of the braid X = RWR⁻¹, and sends x to the verifier B,
- the verifier B selects a bit c and sends c to the prover A,
• if c = 0, the prover A sets y = r and sends y to the verifier B, which verifies the equivalence of the representatives x and ywy⁻¹,
• if c = 1, the prover A calculates a representative y of the braid RS⁻¹ and sends y to the verifier B, which verifies the equivalence of the representatives x and yvy⁻¹,
the last three exchanges being iterated k times.

10. A cryptographic method according to claim 6, **characterized in that**, for authentication of a prover A by a verifier B:
- the prover A is assigned a secret key comprising a representative s of a braid S selected from a group G3 of braids with n strands,
- the prover A is assigned a public key, used by the verifier B, comprising a representative w of a braid W selected from the group G3 and a representative v of the braid SWS⁻¹,
- the prover A selects a braid R in the group G3 by selecting a representative r, calculates a representative x of the braid X = RWR⁻¹, calculates a representative x' of the braid X' = RWR⁻¹, and sends x and x' to the verifier B,
- the verifier B selects a bit c and sends c to the prover A,
• if c = 0, the prover A sets y = r and sends y to the verifier B, which verifies the equivalence of the representatives x and ywy⁻¹ and that of the representatives x' and yvy⁻¹,
• if c = 1, the prover A calculates a representative y of the braid RSR⁻¹ and sends y to the verifier B, which verifies the equivalence of the representatives x' and yxy⁻¹,
the last three exchanges being iterated k times.

11. A cryptographic method according to claim 7, **characterized in that**, for authentication of a prover A by a verifier B:
- the prover A is assigned a secret key comprising a representative s of a braid S selected from a group G4 of braids with n strands,
- the prover A is assigned a public key, used by the verifier B, comprising a representative v of a braid V = S^{P} = S...S, product of S p times, p being an integer greater than or equal to 2,
- the prover A selects a braid R in the group G4 by selecting a representative r, calculates a representative x of the braid X = RVR⁻¹, and sends x to the verifier B,
- the verifier B selects a bit c and sends c to the prover A,
• if c = 0, the prover A sets y = r and sends y to the verifier B, which verifies the equivalence of the representatives x and yvy⁻¹,
• if c = 1, the prover A calculates a representative y of the braid RSR⁻¹ and sends y to the verifier B, which verifies the equivalence of the representatives x and y^{p} = y...y, the representative of the braid Y^{P} obtained from y,
the last three exchanges being iterated k times.

12. A cryptographic method according to claim 6, **characterized in that** the operator T is replaced by an auto-distributive operation.

13. A cryptographic method according to claim 8, **characterized in that** said braid W is pure.
